# EUROPÄISCHE PATENTSCHRIFT

(11) **EP 1 668 972 B1**
(45) Veröffentlichungstag und Bekanntmachung des Hinweises auf die Patenterteilung: **20.07.2011**
(21) Anmeldenummer: 05111487.4
(22) Anmeldetag: 30.11.2005
(51) Int. Cl.: A01B 51/02, A01B 73/00, A01D 75/00

(54) **Wagen zur Abstützung eines Erntevorsatzes mit einer Schutzeinrichtung zur Abdeckung und/oder Beleuchtung des Erntevorsatzes**
Carriage for supporting a harvesting head with a protection device for covering and/or lighting of the head
Chariot pour le support d'une tête de récolte comportant un dispositif de protection pour couvrir et/ou éclairer la tête

(30) Priorität: 07.12.2004 DE 102004059052
(43) Veröffentlichungstag der Anmeldung: 14.06.2006
(73) Patentinhaber: Maschinenfabrik Kemper GmbH & Co. KG, 48973 Stadtlohn (DE)
(72) Erfinder: Lukas, Thomas, 48683 Ahaus-Wüllen (DE); Wübbels, Richard, 46325 Borken (DE)
(74) Vertreter: Holst, Sönke

(56) Entgegenhaltungen:
- EP-A- 1 046 329
- EP-A- 1 579 752
- DE-A1- 1 905 035
- US-A- 3 763 637

## Beschreibung

### Stand der Technik

Die Erfindung betrifft einen Wagen zur Abstützung eines Erntevorsatzes, wobei der Wagen ein Gestell und mindestens ein sich vom Gestell nach unten erstreckendes Rad aufweist und das Gestell zur Abstützung des Erntevorsatzes und zur Gewichtsentlastung der vorderen Räder einer selbstfahrenden Erntemaschine bei einer Straßenfahrt lösbar an dem an der Erntemaschine angebrachten Erntevorsatz befestigbar und zum Erntebetrieb auf einem Feld vom Erntevorsatz trennbar ist.

An selbstfahrenden Erntemaschinen finden Erntevorsätze zum Abernten und Einbringen von Erntegut Verwendung. Aufgrund von Leistungssteigerungen der Erntemaschinen in jüngerer Zeit werden immer breitere Erntevorsätze verwendet, die eine relativ große Masse aufweisen. Während Schneidwerke für Mähdrescher gewöhnlich in sich starr sind und zum Straßentransport vom Mähdrescher getrennt und auf einem Transportwagen abgelegt werden, werden Maispflücker für Mähdrescher und Maisgebisse für Feldhäcksler in der Regel klappbar ausgeführt. Es gibt jedoch auch klappbare Schneidwerke für Mähdrescher. Zum Straßentransport werden äußere Seitenteile der Erntevorsätze in eine Transportstellung verschwenkt, in der Regel nach oben oder innen. Sie bleiben beim Straßentransport an der Vorderseite der Erntemaschine befestigt. Dabei stellt sich die gesetzlich zulässige Gewichtsbelastung der Vorderräder der Erntemaschine bei den zunehmend breiter und schwerer werdenden Erntevorsätzen als problematisch dar.

In der EP 1 046 329 A wurde vorgeschlagen, ein zusätzliches Rad zur Abstützung des Erntevorsatzes bereitzustellen, das beim Straßentransport der Erntemaschine in Bodenkontakt gebracht werden kann. Dadurch erhält man eine zusätzliche Abstützung, die eine Einhaltung der gesetzlichen Vorschriften erleichtert oder ermöglicht. In einer Ausführungsform ist das zusätzliche Rad an einem separaten Wagen angebracht, der unter den Erntevorsatz schiebbar und dort befestigbar ist.

Falls eine Erntemaschine mit einem an ihrer Vorderseite befestigten Erntevorsatz auf einer öffentlichen Straße fahren soll, sind in einigen Ländern Schutzeinrichtungen am Erntevorsatz anzubringen, um geltende Sicherheitsvorschriften einzuhalten. So sind an der Vorderseite des Erntevorsatzes reflektierende Warntafeln anzubringen und die Seitenflächen oder, falls vorhanden, die hochgeschwenkten Seitenteile des Erntevorsatzes mit Seitenplanen abzudecken. Außerdem sind am Erntevorsatz Beleuchtungseinrichtungen zu montieren. Im Stand der Technik, wie er auch in der EP 1 046 329 A zeichnerisch dargestellt ist, werden diese Schutzeinrichtungen jeweils lösbar am Erntevorsatz befestigt. Neben der Anbringung des Erntevorsatzes am Wagen hat der Bediener der Erntemaschine demnach noch die Anbringung der Schutzeinrichtungen zur Aufgabe, die vor dem nächsten Erntevorgang auch wieder abzunehmen sind. Diese Arbeiten erweisen sich als relativ zeitaufwändig.

### Aufgabe der Erfindung

Die der Erfindung zu Grunde liegende Aufgabe wird darin gesehen, einen Wagen zur Abstützung des Erntevorsatzes bei der Straßenfahrt bereitzustellen, der eine Verkürzung der Umrüstzeit zwischen einer Konfiguration zur Straßenfahrt und einer Konfiguration zur Ernte ermöglicht.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, an dem Gestell des Wagens, der zur Abstützung des an der Vorderseite der Erntemaschine angebrachten Erntevorsatzes bei einer Straßenfahrt dient, auch die Schutzeinrichtung zur Abdeckung des Erntevorsatzes anzubringen.

Auf diese Weise erreicht man eine Einhaltung der Sicherheitsbedingungen bei der Straßenfahrt, ohne dem Bediener einen größeren Zeitaufwand zur Anbringung der Schutzeinrichtung aufzuerlegen. Die am Wagen befestigte Schutzeinrichtung kann nicht verloren gehen oder vergessen werden.

Die Schutzeinrichtung umfasst in der Regel Warntafeln, die sich im Straßenfahrzustand an der Vorderseite des Erntevorsatzes vertikal und quer zur Fahrtrichtung erstrecken. Sie sind in der Regel reflektierend ausgeführt und mit Mustern versehen. Zu ihrer Anbringung dient vorzugsweise ein am Gestell befestigter Träger, der horizontal und quer zur Vorwärtsrichtung verläuft. Er befindet sich, wenn das Gestell am Erntevorsatz montiert ist, an der Vorderseite des Erntevorsatzes.

Der erwähnte Träger kann zusätzlich oder alternativ zur Befestigung eines vertikalen Haltepfostens Verwendung finden. Der Haltepfosten trägt eine Seitenplane zur Abdeckung der Seitenfläche des Erntevorsatzes. Die Seitenplane ist ebenfalls Bestandteil der Schutzeinrichtung und wird bei der Straßenfahrt mit ihrem rückwärtigen Ende an der Rückseite des Erntevorsatzes festgezurrt. Dazu kann das rückwärtige Ende der Seitenplane mit einer Stange verbunden sein, die ihrerseits mit federbelasteten Haken ausgestattet ist, die am Erntevorsatz abnehmbar angebracht werden und zur Straffung der Plane dienen. Die erwähnten Seitenplanen werden an beiden Seiten des Erntevorsatzes angebracht. Es wäre im Übrigen auch denkbar, die Seitenplanen und Haltepfosten durch in sich starre, fest mit dem Gestell verbundene Seitenwände zu ersetzen. Dadurch erspart man sich das Anbringen und Abnehmen der rückwärtigen Enden der Seitenplanen vom Erntevorsatz, allerdings auf Kosten des Gewichts.

Die Schutzeinrichtung umfasst weiterhin Beleuchtungsmittel in Form nach vorn strahlender, weißer Lampen und/oder gelber Blinkleuchten. Auch die Beleuchtungsmittel sind zweckmäßigerweise am Gestell befestigt. Ein Anschlusskabel zur Stromversorgung der Beleuchtungsmittel kann an einer Seitenplane befestigt sein. Am rückwärtigen Ende des Anschlusskabels befindet sich ein Stecker, der in eine komplementäre Buchse an der Erntemaschine eingesteckt werden kann.

Falls die Erntemaschine sich nach dem Ende eines Erntevorgangs in einer größeren Entfernung vom Wagen befindet, der zu Beginn der Ernte am Rand eines Felds abgestellt wurde, kann es sinnvoller sein, den Wagen zur Erntemaschine zu transportieren, als die Erntemaschine zum Wagen zu fahren. Das Gestell des Wagens wird aufgrund des Trägers mit den daran angebrachten Elementen der Schutzeinrichtung allerdings relativ voluminös. Der Transport des Wagens, beispielsweise auf einem Anhänger für einen PKW oder einen Traktor, wird vereinfacht, wenn der Träger in eine kompakte Transportposition verbringbar ist. Dazu kann er sich aus drei Elementen zusammensetzen, von denen ein mittleres Element fest am Gestell befestigt ist, während die äußeren Elemente um vertikale Achsen verschwenkbar an den äußeren Enden des mittleren Elements verbunden sind. Die Elemente sind zumindest in der Position, in der sie zum Straßentransport des Erntevorsatzes in einer Linie zueinander ausgerichtet sind, arretierbar. Die äußeren Elemente werden zum Transport um die vertikalen Achsen verschwenkt, vorzugsweise nach hinten, und der Wagen kann leicht und kompakt verladen und transportiert werden. Es wären auch andere Möglichkeiten zur schwenkbaren Anbringung des Trägers denkbar: so könnten zwei jeweils eine Hälfte des Trägers definierende, einklappbare Elemente direkt am Gestell angebracht werden, oder auf jeder Seite des Gestells können zwei einklappbare Elemente vorhanden sein.

Da an landwirtschaftlichen Erntevorgängen in der Regel Traktoren beteiligt sind, um das Erntegut einer Lagerstelle zuzuführen, bietet es sich an, auch einen Traktor zum Einzeltransport des Wagens zu nutzen. Um das Verladen auf einen Anhänger zu ersparen, weist das Gestell des Wagens in einer bevorzugten Ausführungsform Befestigungsmittel auf, die mit einer Dreipunktaufnahme oder einer anderen geeigneten Schnittstelle eines Traktors verbunden werden können. Der Traktor wird somit bei Bedarf zur Lagerstelle des Wagens gefahren, die Dreipunktaufnahme oder andere Schnittstelle wird mit dem Gestell verbunden und der Traktor mit dem Wagen schließlich zur Erntemaschine gefahren.

### Ausführungsbeispiel

In den Zeichnungen ist ein nachfolgend näher beschriebenes Ausführungsbeispiel der Erfindung dargestellt. Es zeigt:
- Fig. 1: eine seitliche schematische Ansicht des vorderen Abschnitts des Einzugsgehäuses einer Erntemaschine mit einem daran angebrachten Erntevorsatz und einem Wagen zur Abstützung des Erntevorsatzes, wobei die Schutzeinrichtung zur Verbesserung der Erkennbarkeit der Anbringung des Wagens am Erntevorsatz fortgelassen wurde,
- Fig. 2: die Ansicht aus Figur 1, jedoch mit der Schutzeinrichtung und dem Vorderteil der Erntemaschine,
- Fig. 3: eine seitliche Ansicht des Wagens im vom Erntevorsatz getrennten Zustand,
- Fig. 4: eine Vorderansicht des Wagens im vom Erntevorsatz getrennten Zustand,
- Fig. 5: eine Draufsicht auf den Erntevorsatz und den Wagen im gekoppelten Zustand, und
- Fig. 6: eine Ansicht eines Traktors, an dessen Unterlenkern der Wagen zum Einzeltransport befestigt ist.

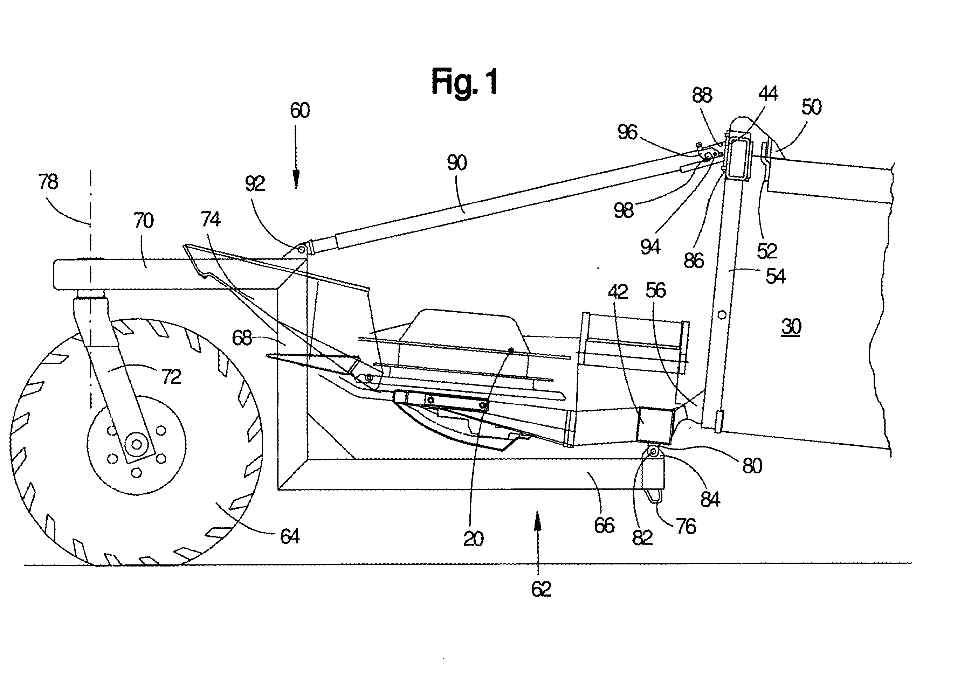

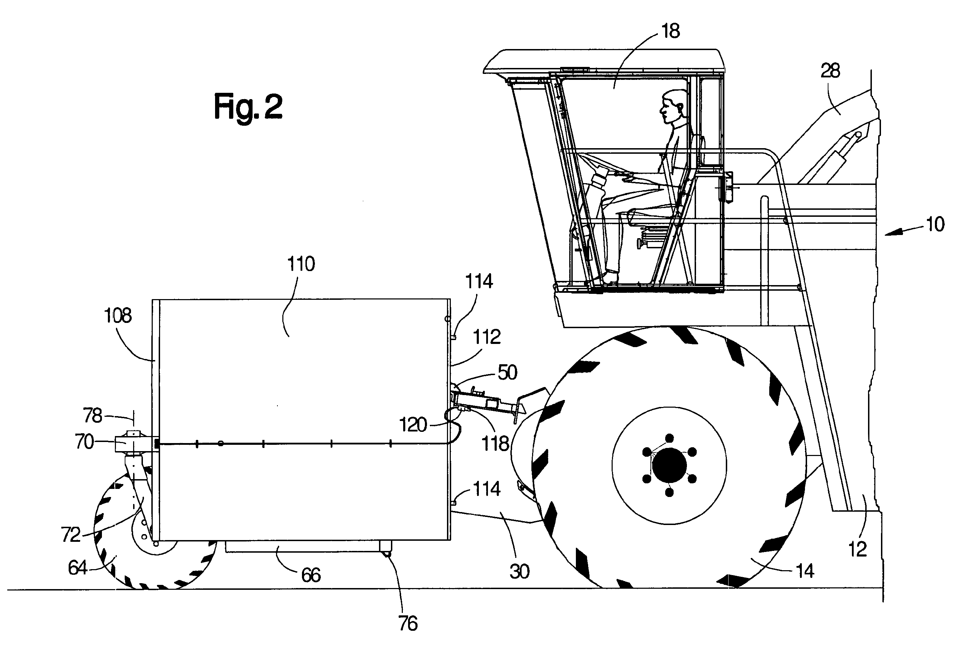

In der Figur 1 ist der Einzugskanal 30 einer landwirtschaftlichen Erntemaschine 10 (s. Figur 2) in der Art eines selbstfahrenden Feldhäckslers schematisch dargestellt. Die Erntemaschine 10 baut sich auf einem Rahmen 12 auf, der von vorderen angetriebenen Rädern 14 und rückwärtigen lenkbaren Rädern (nicht gezeigt) getragen wird. Die Bedienung der Erntemaschine 10 erfolgt von einer Fahrerkabine 18 aus, von der aus ein Vorsatz 20 einsehbar ist. Mittels eines Erntevorsatzes 20 vom Boden aufgenommenes Gut, z. B. Mais, wird bei der Ernte über ein Einzugsgehäuse 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen drehbaren Austragschacht 28. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an beliebigen anderen selbstfahrenden Erntemaschinen wie Mähdreschern mit zugehörigen Erntevorsätzen, wie Schneidwerken oder Maispflückern, Verwendung finden. Im Folgenden beziehen sich Richtungsangaben, wie vor, hinter, seitlich und oberhalb, auf die Vorwärtsrichtung der Erntemaschine 10 und des Erntevorsatzes 20, die in den Figuren 1 und 2 nach links verläuft.

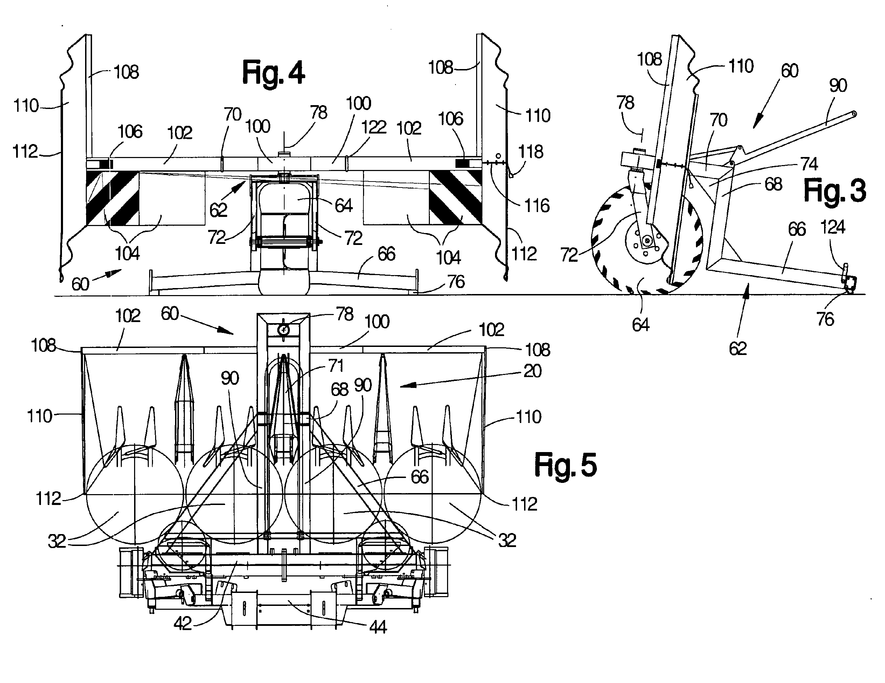

Zum Aufnehmen des Ernteguts dient der Erntevorsatz 20, der in Vorwärtsrichtung an der Frontseite des Einzugsgehäuses 30 der Erntemaschine 10 befestigt ist. Der Erntevorsatz 20 ist in der dargestellten Ausführungsform (s. insbesondere Figur 5) ein an sich bekanntes Maisgebiss. Anstelle der dargestellten, in sich starren Ausführungsform, die aufgrund der 3 m nicht überschreitenden Arbeitsbreite nicht in eine Straßenfahrstellung mit reduzierter Breite verschwenkbar ist, könnte auch eine ebenfalls an sich bekannte, mit zum Straßentransport nach oben schwenkbar an einem Mittelteil befestigten Außenteilen ausgestattete Ausführungsform Verwendung finden. Am Erntevorsatz 20 sind in der vorliegenden Ausführungsform vier Einzugs- und Mähtrommeln 32 angebracht. Die Einzugs- und Mähtrommeln 32 ziehen im Betrieb die Stängel des Mähguts in aufrechter Stellung ein, schneiden sie ab und führen sie dem Einzugsgehäuse 30 und anschließend der Häckseltrommel der Erntemaschine 10 zu.

Der Erntevorsatz 20 umfasst einen Trägerrahmen, der einen unteren Querträger 42 und einen oberen Querträger 44 aufweist. Der untere Querträger 42 erstreckt sich unten an der Rückseite des Erntevorsatzes 20. Der obere Querträger 44 erstreckt sich in seitlicher Richtung oberhalb des Einlasses des Einzugsgehäuses 30 über dessen Breite. Er ist mit hakenförmigen Tragelementen 50 verbunden (s. Figur 1), die von komplementären Tragelementen 52 des Einzugsgehäuses 30 untergriffen werden und zur Befestigung des Erntevorsatzes 20 an der Erntemaschine 10 dienen. Er ist durch sich vertikal erstreckende Träger 54 und Verbindungsbleche 56 mit dem unteren Querträger 42 verbunden.

In der Figur 1 liegt der Erntevorsatz 20 auf einem Wagen 60 auf, der zur Abstützung des Erntevorsatzes 20 bei der Straßenfahrt dient. Der Wagen setzt sich aus einem Gestell 62 und einem Rad 64 zusammen. Das Gestell 62 umfasst ein fächerartig aufgespreiztes Rückteil 66, das über etwa vertikal verlaufende Streben 68 mit einem Vorderteil 70 verbunden ist und unterhalb des Vorderteils 70 angeordnete Radhalterungen 72, zwischen denen das Rad 14 um eine sich seitlich erstreckende Achse drehbar gelagert ist. An der dem Rückteil 66 zugewandten Seite des Vorderteils 70 befindet sich eine Wagenpositionierungseinrichtung 74, die eine taschen- oder tütenartige, in der Figur 1 nach rechts gerichtete Öffnung aufweist, deren Unterseite sich schräg nach hinten und unten bis zum Rückteil 66 hinunter erstreckt. Die Wagenpositionierungseinrichtung 74 dient zur selbsttätigen Ausrichtung des Wagens 60 gegenüber dem Erntevorsatz 20, indem eine Teilerspitze 71 des Erntevorsatzes 20 darin aufgenommen wird (s. Figur 5). Rückwärtige Stützen 76 stützen den Rückteil 66 des Gestells auf dem Erdboden ab. Das Rad 64 ist in der dargestellten Ausführungsform um eine sich etwa vertikal erstreckende Drehachse 78 nachlaufend lenkbar am Gestell 62 angelenkt.

Zwei an der Unterseite des unteren Querträgers 42 angeschweißte Konsolen 80 sind durch jeweils einen abnehmbaren Haltestift 82 mit außen an der rückwärtigen Oberseite des Rückteils 66 befestigten Haltern 84 verbunden. Die Haltestifte 82 erstrecken sich jeweils durch koaxiale Öffnungen in der Konsole 80 und im Halter 84. Weiterhin ist der obere Querträger 44 von zwei seitlich nebeneinander angeordneten, mit ihm verschraubten Konsolen 86 umschlossen, die je eine Aufnahmeeinrichtung 88 tragen. Zwei Streben 90 sind an ihrem vorderen Ende um eine horizontale, quer zur Vorwärtsrichtung verlaufende Achse 92 oben an der Rückseite des Vorderteils 70 des Wagens 60 angelenkt und liegen an ihrem hinteren Ende auf einer Aufnahmeeinrichtung 88 auf. Ein um eine horizontal und quer zur Vorwärtsrichtung verlaufende Achse 94 schwenkbar an der Aufnahmeeinrichtung 88 angelenkter Riegel 96 umschließt von oben her einen horizontal und quer zur Vorwärtsrichtung verlaufenden Stift 98, der am hinteren Ende der Strebe 90 befestigt ist.

Die Figuren 3 und 4 zeigen den Wagen 60 ohne Erntevorsatz 20. Hinter der Drehachse 78 ist am Vorderteil 70 ein sich horizontal und quer zur Vorwärtsrichtung erstreckender Träger angebracht, der ein mittleres, starr am Vorderteil 70 angebrachtes Element 100 und zwei sich dazu parallel erstreckende äußere Elemente 102 umfasst. An den Unterseiten der äußeren Elemente 102 sind sich vertikal und quer zur Vorwärtsrichtung erstreckende Warntafeln 104 befestigt. Endseitig tragen die äußeren Elemente 102 außerdem Beleuchtungsmittel 106 in Form kombinierter gelber Blink- und weißer Beleuchtungslampen.

An den äußeren Enden der äußeren Elemente 102 sind weiterhin sich vertikal erstreckende Haltepfosten 108 fixiert, die jeweils eine Seitenplane 110 haltern. Am rückwärtigen Ende der Seitenplanen 110 sind Stangen 112 befestigt, die wiederum durch federbelastete Haken 114 trennbar mit dem Erntevorsatz 20 verbunden sind. Die Stangen 112 und Haltepfosten 108 sind insbesondere Vierkantrohre. Ein mit den Beleuchtungsmitteln 106 verbundenes Anschlusskabel 116 ist über einen Teil seiner Länge an der linken Seitenplane 110 befestigt, insbesondere sandwichartig zwischen zwei Lagen der Seitenplane 110 eingeschlossen, und trägt endseitig einen Stecker 118, der in eine passende Buchse 120 am Einzugsgehäuse 30 der Erntemaschine 10 einsteckbar ist.

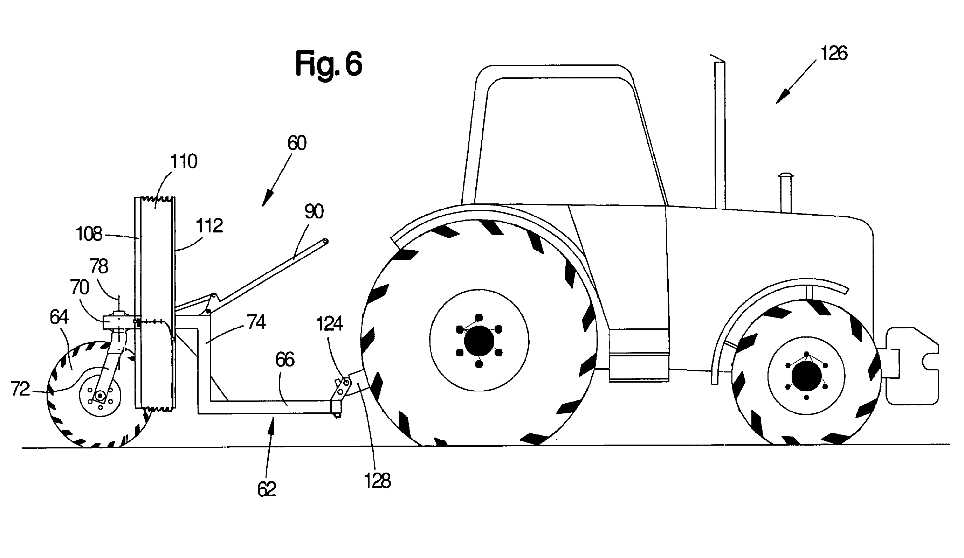

Die äußeren Elemente 102 des Trägers sind um sich vertikal erstreckende Achsen 122 am mittleren Element 100 angelenkt und sind in der in den Figuren 2 bis 5 dargestellten Stellung arretierbar. Der Wagen 60 weist am Rückteil 62 klappbare Befestigungsmittel 124 zum Anbringen des Gestells 62 an den Unterlenkern 128 (s. Figur 6) eines Traktors 126 auf. Die Strebe 90 wird dann mit dem Oberlenker der Dreipunktaufnahme verbunden.

Die in den Figuren 1 und 2 dargestellte Konfiguration wird zum Transport der Erntemaschine 10 mit dem daran angebrachten Erntevorsatz 20 auf einer Straße hergestellt. Der Bediener fährt die Erntemaschine 10 mit dem Erntevorsatz 20 an den Wagen 60 heran, so dass die Wagenpositionierungseinrichtung 74 im Zusammenwirken mit der Teilerspitze 71 die gewünschte Ausrichtung zwischen Wagen 60 und Erntevorsatz 20 bewirkt. Die Haltestifte 82 werden eingeführt und die Strebe 90 wird verriegelt.

Zur einfacheren Bewegung der Anbringung des Wagens 60 am Erntevorsatz 20 könnte oberhalb des Vorderteils 70 ein einzelner Hebel vorgesehen sein. Der Hebel wäre an der Vorderseite des Wagens 60 um eine horizontal und quer zur Vorwärtsrichtung verlaufende Achse angelenkt. Oberhalb der Achse sind zwei Stangen am Hebel angelenkt, die an ihrem anderen Ende mit einer zusätzlichen Konsole verbunden sind, die jeweils an einer Strebe 90 befestigt ist. Zusätzlich ist an der Unterseite der Streben 90 ein Seil angebracht, das über Umlenkrollen mit den federbelasteten Haltestiften 82 verbunden ist und zu ihrem Ent- und Verriegeln dient. Dadurch wird es möglich, durch eine Bewegung des Hebels die Streben 90 auf die Aufnahmevorrichtung 88 zu legen und gleichzeitig die untere Verriegelung mit den Bolzen 82 zu schließen. Analog können durch eine Bewegung des Hebels 2 in umgekehrter Richtung die Streben 90 nach oben verschwenkt und die Bolzen 82 gelöst werden.

Der erfindungsgemäße Wagen 60 ist mit der Schutzeinrichtung ausgestattet, die sich aus den Warntafeln 104, den Seitenplanen 110 und den Beleuchtungseinrichtungen 106 zusammensetzt. Bei der Vorbereitung des Erntevorsatzes 20 zu einer Straßenfahrt sind demnach lediglich die Haken 114 der Stangen 112 an den Rückseiten der Seitenplanen 110 am Erntevorsatz 20 zu befestigen und der Stecker 118 in die Buchse 120 zu stecken; weitere Maßnahmen zur Anbringung der Schutzeinrichtung erübrigen sich.

Soll der Wagen 60 zum Erntebetrieb wieder vom Erntevorsatz 20 getrennt werden, wird der Erntevorsatz 20 durch Betätigung geeigneter Hydraulikzylinder der Erntemaschine 10 angehoben, um das Rad 64 zu entlasten. Dann werden die Haltestifte 82 abgenommen und der Riegel 96 nach hinten (in Figur 4 im Uhrzeigersinn) gedreht, um die Strebe 90 freizusetzen. Die federbelasteten Haken 114 werden abgenommen und der Stecker 118 aus der Buchse 120 gezogen. Die Erntemaschine 10 fährt dann nach hinten fort. Die Umrüstzeit für den Straßentransport bzw. Erntebetrieb ist somit relativ gering.

Um zu vermeiden, dass der Bediener zur Befestigung am oder zum Abnehmen des Wagens 60 vom Erntevorsatz 20 die Fahrerkabine 18 verlassen muss, können zur Bewegung der Haltestifte 82 auch fremdkraftbetätigte Arretierungseinrichtungen vorgesehen werden, z. B. Hydraulikzylinder, die vom Arbeitsplatz des Bedieners in der Fahrerkabine 18 aus steuerbar sind. Der Riegel 96 könnte ebenfalls durch Fremdkraft oder über ein Seil von der Fahrerkabine 18 aus bewegt, zumindest gelöst, werden. Der Stecker 118 kann dann am Gestell 62 befestigt sein, während die Buchse 120 an einem benachbarten Halter am Einzugsgehäuse 30 angeordnet ist, so dass die elektrische Verbindung für die Beleuchtungsmittel 106 beim Ankoppeln des Wagens 60 selbsttätig hergestellt und beim Abkoppeln selbsttätig getrennt wird. Die Seitenplanen 110 könnten dann durch in sich starre Ausführungsformen ersetzt oder durch geeignete Zugmittel von der Erntemaschine 10 aus erfasst und gespannt werden.

Falls sich der Wagen 60 nach der Ernte in größerer Entfernung von der Erntemaschine 10 befindet, kann er mittels eines Traktors 126 herangeholt werden (Figur 6), indem die Unterlenker 128 des Traktors mit den Befestigungsmitteln 124 verbunden werden. Anders als in der Figur 6 dargestellt, könnte ein Oberlenker einer Dreipunktaufnahme mit der Strebe 90 verbunden werden. Die nach hinten - in der Figur 3 nach rechts - einschwenkbare Anlenkung der äußeren Elemente 102 des Trägers um die Achsen 122 ermöglicht eine wesentliche Verminderung der Transportbreite.

## Patentansprüche

1. Wagen (60) zur Abstützung eines Erntevorsatzes (20), wobei der Wagen (60) ein Gestell (62) und mindestens ein sich vom Gestell (62) nach unten erstreckendes Rad (64) aufweist und das Gestell (62) zur Abstützung des Erntevorsatzes (20) und zur Gewichtsentlastung der vorderen Räder (14) einer selbstfahrenden Erntemaschine (10) bei einer Straßenfahrt lösbar an dem an der Erntemaschine (10) angebrachten Erntevorsatz (20) befestigbar und zum Erntebetrieb auf einem Feld vom Erntevorsatz (20) trennbar ist, **dadurch gekennzeichnet, dass** eine Schutzeinrichtung zur Abdeckung und/oder Beleuchtung des Erntevorsatzes (20) bei der Straßenfahrt am Gestell (62) angebracht ist.

2. Wagen (60) nach Anspruch 1, **dadurch gekennzeichnet, dass** am Gestell (62) ein sich im montierten Zustand an der Vorderseite des Erntevorsatzes (20) horizontal und quer zur Vorwärtsrichtung erstreckender Träger angebracht ist, an dem Warntafeln (104) der Schutzeinrichtung befestigt sind.

3. Wagen (60) nach Anspruch 1 oder 2, **dadurch gekennzeichnet, dass** am Gestell (62) ein sich im montierten Zustand an der Vorderseite des Erntevorsatzes (20) horizontal und quer zur Vorwärtsrichtung erstreckender Träger angebracht ist, an dessen Enden jeweils ein sich vertikal erstreckender Haltepfosten (108) befestigt ist, und dass die Haltepfosten (108) jeweils mit einer Seitenplane (110) der Schutzeinrichtung verbunden sind, die an ihrem anderen Ende mit der Rückseite des Erntevorsatzes (20) verbindbar ist.

4. Wagen (60) nach Anspruch 3, **dadurch gekennzeichnet, dass** die Seitenplanen (110) an ihrem rückwärtigen Ende jeweils mit einer Stange (112) verbunden sind, die wiederum mit federbelasteten Haken (114) versehen ist, die mit dem Erntevorsatz (20) verbindbar sind und im montierten Zustand zur Straffung der Seitenplane (110) dienen.

5. Wagen (60) nach einem der Ansprüche 1 bis 4, **dadurch gekennzeichnet, dass** das Gestell (62) vorderseitig mit Beleuchtungsmitteln (106) versehen ist.

6. Wagen (60) nach Anspruch 5, **dadurch gekennzeichnet, dass** ein mit einem Stecker (118) zum Einstecken in eine komplementäre Buchse (120) an der Erntemaschine (10) ausgestattetes Anschlusskabel (116) für die Beleuchtungsmittel (106) an einer Seitenplane (110) angebracht ist.

7. Wagen (60) nach einem der Ansprüche 2 bis 6, **dadurch gekennzeichnet, dass** der Träger in eine kompakte Transportposition verbringbar ist, um das Gestell (62) leichter separat transportieren zu können.

8. Wagen (60) nach Anspruch 7, **dadurch gekennzeichnet, dass** der Träger ein mittleres, fest am Gestell befestigtes Element (100) und zwei äußere, um eine etwa vertikal verlaufende Achse (122) schwenkbar am mittleren Element (100) angelenkte Elemente (102) umfasst.

9. Wagen (60) nach einem der vorhergehenden Ansprüche, **dadurch gekennzeichnet, dass** am Gestell (62) Befestigungsmittel (90, 124) zum Anbringen des Gestells (62) an einer Schnittstelle, insbesondere einer Dreipunktaufnahme, eines Traktors vorhanden sind, um den Wagen (60) einzeln durch einen Traktor transportieren zu können.

10. Kombination aus einer Erntemaschine (10), einem Erntevorsatz (20) und einem Wagen (60) zur Abstützung des Erntevorsatzes (20) nach einem der vorhergehenden Ansprüche.

## Claims

1. Carriage (60) for supporting a harvesting head (20), wherein the carriage (60) has a frame (62) and at least one wheel (64) extending downwards from the frame (62), and the frame (62) can be fastened releasably to the harvesting head (20), which is attached to the harvesting machine (10), during road travel in order to support the harvesting head (20) and to relieve the front wheels (14) of a self-propelling harvesting machine (10) of weight, and can be separated from the harvesting head (20) for the harvesting operation in a field, **characterized in that** a protection device for covering and/or lighting of the harvesting head (20) during road travel is attached to the frame (62).

2. Carriage (60) according to Claim 1, **characterized in that** a carrier which, in the fitted state, extends horizontally and transversely with respect to the forwards direction on the front side of the harvesting head (20) and to which warning signs (104) of the protection device are fastened is attached to the frame (62).

3. Carriage (60) according to Claim 1 or 2, **characterized in that** a carrier which, in the fitted state, extends horizontally and transversely with respect to the forwards direction on the front side of the harvesting head (20) and to the ends of which a vertically extending holding post (108) is in each case fastened is attached to the frame (62), and **in that** the holding posts (108) are each connected to a side tarpaulin (110) of the protection device, which can be connected at the other end thereof to the rear side of the harvesting head (20).

4. Carriage (60) according to Claim 3, **characterized in that** the side tarpaulins (110) are each connected at the rear end thereof to a rod (112) which in turn is provided with spring-loaded hooks (114) which can be connected to the harvesting head (20) and, in the fitted state, serve to tension the side tarpaulins (110).

5. Carriage (60) according to one of Claims 1 to 4, **characterized in that** the front side of the frame (62) is provided with lighting means (106).

6. Carriage (60) according to Claim 5, **characterized in that** a connecting cable (116) which is provided with a plug (118) for plugging into a complementary socket (120) on the harvesting machine (10) and is intended for the lighting means (106) is attached to a side tarpaulin (110).

7. Carriage (60) according to one of Claims 2 to 6, **characterized in that** the carrier can be brought into a compact transport position in order to be able to separately transport the frame (62) more easily.

8. Carriage (60) according to Claim 7, **characterized in that** the carrier comprises a central element (100) fastened fixedly to the frame, and two outer elements (102) which are coupled to the central element (100) so as to be pivotable about an approximately vertically running axis (122).

9. Carriage (60) according to one of the preceding claims, **characterized in that** there are fastening means (90, 124) on the frame (62) for attaching the frame (62) to an intersecting point, in particular a three-point holder, of a tractor in order to be able to transport the carriage (60) individually by means of a tractor.

10. Combination of a harvesting machine (10), a harvesting head (20) and a carriage (60) for supporting the harvesting head (20) according to one of the preceding claims.

## Revendications

1. Chariot (60) pour le support d'une tête de récolte (20), le chariot (60) comportant un châssis (62) et au moins une roue (64) s'étendant vers le bas à partir du châssis (62) et le châssis (62) pouvant être fixé de façon amovible à la tête de récolte (20) positionnée au niveau de la machine à récolter (10) pour supporter la tête de récolte (20) et pour alléger le poids sur les roues (14) avant d'une machine à récolter (10) automotrice lors de la conduite sur route et pouvant être séparé d'une tête de récolte (20) en mode récolte dans un champ, **caractérisé en ce qu'**un dispositif de protection est placé sur le châssis (62) pour la conduite sur route, pour couvrir et/ou éclairer la tête de récolte (20).

2. Chariot (60) selon la revendication 1, **caractérisé en ce qu'**un support s'étendant, à l'état monté, au niveau du côté avant de la tête de récolte (20), horizontalement et transversalement par rapport à la direction avant, est positionné au niveau du châssis (62) et que des panneaux d'avertissement (104) du dispositif de protection sont fixés contre lui.

3. Chariot (60) selon la revendication 1 ou 2, **caractérisé en ce qu'**un support s'étendant, à l'état monté, au niveau du côté avant de la tête de récolte (20), horizontalement et transversalement par rapport à la direction avant, est positionné au niveau du châssis (62), qu'un poteau d'arrêt (108) s'étendant verticalement est respectivement fixé au niveau de ses extrémités et que les poteaux d'arrêt (108) sont respectivement reliés à un plan latéral (110) du dispositif de protection qui peut être relié, au niveau de son autre extrémité, au côté arrière de la tête de récolte (20).

4. Chariot (60) selon la revendication 3, **caractérisé en ce que** les plans latéraux (110) sont respectivement reliés, au niveau de leur extrémité arrière, à une tige (112) qui est pourvue à son tour de crochets (114) chargés par ressort pouvant être reliés à la tête de récolte (20) et servant, à l'état monté, au renfort des plans latéraux (110).

5. Chariot (60) selon l'une quelconque des revendications 1 à 4, **caractérisé en ce que** le châssis (62) est pourvu sur son côté avant de moyens d'éclairage (106).

6. Chariot (60) selon la revendication 5, **caractérisé en ce qu'**un câble de raccordement (116) équipé d'un connecteur (118) à insérer dans une douille (120) complémentaire au niveau de la machine à récolter (10) est placé au niveau d'un plan latéral (110) pour les moyens d'éclairage (106).

7. Chariot (60) selon l'une quelconque des revendications 2 à 6, **caractérisé en ce que** le support peut être disposé dans une position de transport compacte pour faciliter le transport séparé du châssis (62).

8. Chariot (60) selon la revendication 7, **caractérisé en ce que** le support comprend un élément (100) central fixé au châssis et deux éléments (102) extérieurs articulés au niveau de l'élément (100) central de façon à pouvoir pivoter autour d'un axe (122) s'étendant quelque peu verticalement.

9. Chariot (60) selon l'une quelconque des revendications précédentes, **caractérisé en ce que** des moyens de fixation (90, 124) permettant d'amener le châssis (62) au niveau d'une interface, notamment d'un logement à trois points, d'un tracteur sont présents au niveau du châssis (62) pour permettre le transport du chariot (60) de façon individualisée à l'aide d'un tracteur.

10. Combinaison composée d'une machine à récolter (10), d'une tête de récolte (20) et d'un chariot (60) conçu pour supporter la tête de récolte (20) selon l'une quelconque des revendications précédentes.
